# FASCICULE DE BREVET EUROPEEN

(11) **EP 0 648 321 B1**
(45) Date de publication et mention de la délivrance du brevet: **04.06.1997**
(21) Numéro de dépôt: 94914448.9
(22) Date de dépôt: 26.04.1994
(51) Int. Cl.: F21V 8/00, G02B 6/00, G02B 5/02

(54) **ORGANE DE DIFFUSION DE LUMIERE ASSOCIE A UNE SOURCE LUMINEUSE COMPORTANT UNE SERIE D'ELEMENTS PONCTUELS**
LICHTDIFFUSIONSELEMENT IN ZUSAMMENWIRKUNG MIT EINER AUS EINER SERIE PUNKTFöRMIGER ELEMENTE BESTEHENDEN LICHTQUELLE
LIGHT DIFFUSION MEMBER ASSOCIATED WITH A LIGHT SOURCE COMPRISING A SERIES OF INDIVIDUAL ELEMENTS

(30) Priorité: 29.04.1993 FR 9305078
(43) Date de publication de la demande: 19.04.1995
(73) Titulaire: SOCIETE INDUSTRIELLE DE LIAISONS ELECTRIQUES, F-75116 Paris (FR)
(72) Inventeur: SABATER, Jacques, F-91190 Gif-sur-Yvette (FR)
(74) Mandataire: Fruchard, Guy
(86) Numéro de dépôt international: FR9400474
(87) Numéro de publication internationale: WO9425795

(56) Documents cités:
- EP-A- 0 071 230
- US-A- 5 128 783
- US-A- 5 187 765
- PATENT ABSTRACTS OF JAPAN vol. 016, no. 421 (P-1414) 4 Septembre 1992 & JP,A,04 142 502 (TOUKAI DENKI) 15 Mai 1992

## Description

La présente invention concerne un organe de diffusion de lumière associé à une source lumineuse comportant une série d'éléments lumineux ponctuels tels que des extrémités de fibres optiques ou des diodes électroluminescentes.

On connaît des dispositifs assurant une émission de lumière sous forme d'une série d'éléments lumineux ponctuels, par exemple une matrice de diodes électroluminescentes ou un faisceau de fibres optiques ayant une extrémité associée à une matrice de diodes électroluminescentes ou à un ou plusieurs organes d'introduction de lumière tels que des lampes de type conventionnel. En général, ce type de dispositif est destiné à afficher un signal lumineux donnant une indication ponctuelle sur l'état d'un circuit associé à la source de lumière. Dans ce cas la simple détection d'un point lumineux constitué par une diode électroluminescente ou une extrémité d'une fibre optique est suffisante pour donner l'information recherchée.

On a envisagé d'utiliser une source de lumière de ce type dans un feu de signalisation notamment pour un feu de circulation. Dans le cas d'une transmission par un faisceau de fibres optiques on peut reporter l'organe d'introduction de lumière au niveau du sol et l'on a ainsi un accès aisé à cet organe contrairement aux organes d'émission de lumière actuels qui sont disposés en haut du mat de signalisation. Toutefois, les éléments ponctuels apparaissent pour un observateur extérieur selon une série de points lumineux et non sous forme d'un disque lumineux comme c'est le cas pour les feux de signalisation traditionnels.

Selon l'invention, on propose un organe de diffusion de lumière associé à une source lumineuse comportant une série d'éléments lumineux ponctuels, cet organe comportant une plaque en matériau laissant passer la lumière et ayant des plots de diffusion en saillie sur une face et des alvéoles de réception des éléments lumineux ponctuels disposés en regard des plots de diffusion et débouchant sur une face opposée à ceux-ci.

Ainsi, lorsqu'un élément lumineux ponctuel est disposé dans une alvéole le faisceau lumineux issu de cet élément est réfracté par la surface du plot de diffusion correspondant de sorte que les faisceaux diffusés par les différents éléments ponctuels se mélangent et forment un faisceau lumineux sensiblement homogène qui se propage vers les observateurs. Ceci améliore la vue que l'utilisateur a du feu en rendant son disque de lumière quasi uniforme alors que les éléments lumineux ponctuels donneraient des points lumineux très brillants dont la vue pourrait être désagréable.

Selon des aspects avantageux de l'invention, les plots de diffusion ont une surface asphérique, de préférence avec une méridienne elliptique, les plots de diffusion sont accolés les uns des autres, et les alvéoles comportent un fond écarté de la face comportant les plots de diffusion d'une distance telle qu'un faisceau issu d'un élément lumineux ponctuel a une enveloppe qui est circonscrite à un contour d'un plot de diffusion au niveau de la face de la plaque sur laquelle les plots de diffusion sont en saillie. On a ainsi constaté qu'on obtient une diffusion optimale de la lumière transmise par les éléments lumineux ponctuels.

D'autres caractéristiques et avantages de l'invention apparaîtront à la lecture de la description qui suit d'un mode de réalisation particulier non limitatif de l'invention en relation avec les figures ci-jointes parmi lesquelles :
- la figure 1 est une vue en élévation partielle d'un premier mode de réalisation d'un organe de diffusion de lumière selon l'invention,
- la figure 2 est une vue en coupe, selon la ligne II-II de la figure 1,
- la figure 3 est une vue en élévation partielle d'un mode de réalisation préféré de l'invention,
- la figure 4 est une vue en coupe selon la ligne IV-IV de la figure 3.

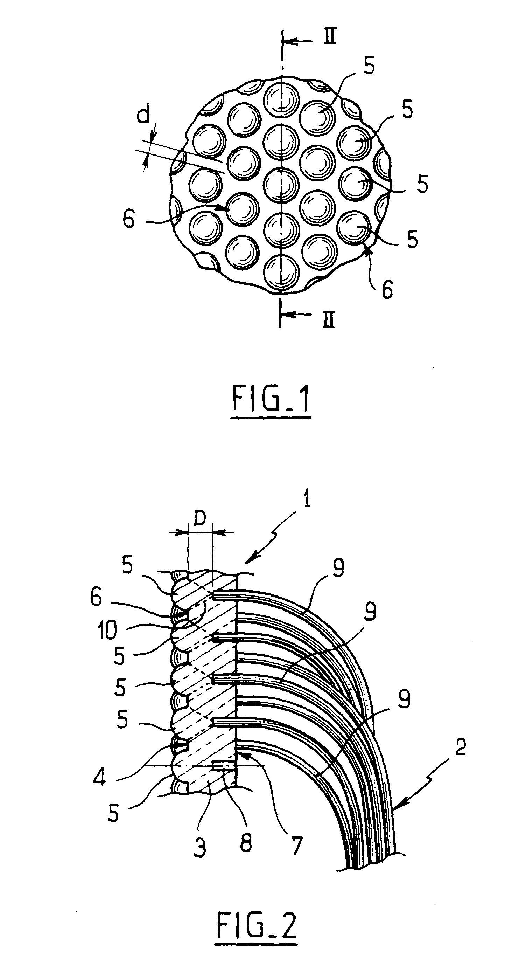

En référence aux figures 1 et 2, l'organe de diffusion de lumière selon l'invention, généralement désigné en 1 est associé à une source lumineuse comportant une série d'éléments lumineux ponctuels, par exemple un faisceau de fibres optiques généralement désigné en 2 dont l'extrémité inférieure est reliée de façon non représentée à un organe d'introduction de lumière.

L'organe de diffusion de lumière 1 comprend une plaque 3 ayant une face 4 comportant des plots de diffusion 5 ayant une surface en forme de calotte sphérique qui s'étend en saillie par rapport à la face 4 de la plaque 3 et se raccorde à celle-ci selon un contour circulaire 6. Dans ce mode de réalisation, les plots de diffusion 5 sont légèrement écartés les uns des autres.

Sur la face 7 opposée à la face 4, la plaque 3 comporte des alvéoles 8 de réception de fibres optiques. Les alvéoles 8 sont cylindriques et s'étendent perpendiculairement à la face de réception 7 en regard d'un plot de diffusion 5. Une fibre optique 9 est engagée dans chaque alvéole 8. Pour une meilleure compréhension de l'invention, l'une des alvéoles 8 a été représentée sans fibre optique 9 sur la figure 2. Le fond des alvéoles 8 est écarté de la face 4 de la plaque d'une distance D telle qu'un faisceau issu d'une fibre optique 9 a une enveloppe 10 qui coïncide avec le contour 6 du plot de diffusion correspondant. La distance D est déterminée par le diamètre du contour des plots de diffusion 5 au niveau de la face 4 et l'ouverture numérique de la fibre optique dans la matière constituant la plaque, ce qui donne l'angle au sommet de l'enveloppe du faisceau issu de la fibre optique.

La plaque 3 est de préférence réalisée en un matériau transparent tel que du verre ou un polycarbonate coloré dans la masse mais on peut également utiliser un matériau translucide. Les plots de diffusion 5 sont de préférence réalisés en une seule pièce avec la plaque.

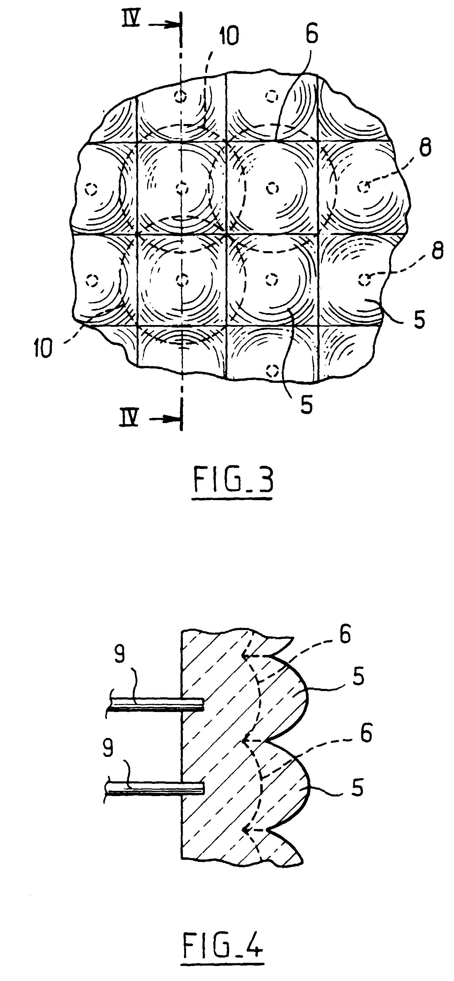

Les figures 3 et 4 illustrent un mode de réalisation préféré de l'invention. Dans ce mode de réalisation les plots de diffusion 5 ont une surface asphérique, de préférence une surface de révolution ayant une méridienne elliptique comme cela apparaît sur la figure 4. Par ailleurs les plots de diffusion 5 sont cette fois accolés les uns aux autres. A cet effet, le contour 6 d'un plot de diffusion au niveau de la face de la plaque sur laquelle les plots de diffusion sont en saillie à selon une vue en élévation une forme carrée et, selon une direction perpendiculaire à la face, une forme en festons illustrée en pointillés sur la figure 4. Dans ce cas le fond des alvéoles est disposé pour que le faisceau lumineux issu d'un élément lumineux ponctuel ait une enveloppe circonscrite au contour du plot de diffusion comme illustré par un cercle pointillé 10 sur la figure 3.

Bien entendu l'invention n'est pas limitée au mode de réalisation décrit et on peut y apporter des variantes de réalisation sans sortir du cadre de l'invention. En particulier, bien que les plots de diffusion aient été illustrés sous forme de demi-sphères ou de surfaces de révolution à méridienne elliptique, on peut également réaliser l'invention en utilisant des plots ayant une surface externe en forme de calotte sphérique inférieure à une demi-sphère ou toute forme appropriée au type de diffusion que l'on recherche, en particulier dans le cas où l'on souhaite une diffusion ayant une orientation privilégiée.

En outre, l'organe de diffusion selon l'invention peut être recouvert d'une lentille ayant une face interne lisse ou comportant des nervures de réfraction comme cela est réalisé actuellement dans les feux conventionnels.

Bien que l'invention ait été décrite en relation avec des éléments lumineux ponctuels formés par les extrémités de fibres optiques, on peut également utiliser des éléments lumineux ponctuels formés par des diodes électroluminescentes ou d'autres éléments lumineux ponctuels.

Bien que l'invention ait été illustrée avec des plots de diffusion distribués de façon uniforme avec des cavités centrées sur le contour du plot de diffusion, on peut prévoir une distribution irrégulière associée ou non à un décentrage des cavités afin que le faisceau issu de l'organe de diffusion soit décalé, par exemple pour qu'une partie principale du faisceau soit orientée vers la chaussée tandis qu'une partie minime est tournée vers le trottoir adjacent à la chaussée.

Bien que le terme de plot de diffusion ait été employé, on notera que le fonctionnement du dispositif selon l'invention résulte essentiellement d'une réfraction de la lumière. Un effet supplémentaire de diffraction peut toutefois être également obtenu par un choix approprié de la matière formant l'organe de diffusion.

## Revendications

1. Organe de diffusion de lumière associé à une source lumineuse comportant une série d'éléments lumineux ponctuels (9) caractérisé en ce qu'il comporte une plaque (3) en matériau laissant passer la lumière et ayant des plots de diffusion (5) en saillie sur une face (4), et des alvéoles (8) de réception des éléments lumineux ponctuels (9) disposés en regard des plots de diffusion (5) et débouchant sur une face (7) opposée à ceux-ci.

2. Organe de diffusion de lumière selon la revendication 1, caractérisé en ce que les plots de diffusion (5) ont une surface asphérique.

3. Organe de diffusion de lumière selon la revendication 2, caractérisé en ce que les plots de diffusion (5) ont une surface de révolution ayant une méridienne elliptique.

4. Organe de diffusion de lumière selon la revendication 3, caractérisé en ce que les plots de diffusion (5) sont accolés les uns aux autres.

5. Organe de diffusion de lumière selon l'une des revendications 1 à 4, caractérisé en ce que les alvéoles (8) comportent un fond écarté de la face (4) comportant les plots de diffusion (5) d'une distance (D) telle qu'un faisceau issu d'une fibre optique (9) a une enveloppe circonscrite à un contour (6) du plot de diffusion (5) correspondant au niveau de la face de la plaque sur laquelle les plots de diffusion sont en saillie.

## Patentansprüche

1. Lichtdiffusionselement, das mit einer eine Vielzahl punktförmiger Lichtelemente (9) enthaltenden Lichtquelle verbunden ist, dadurch **gekennzeichnet,** daß es eine Platte (3) aus lichtdurchlässigem Material enthält, die an einer Oberfläche (4) vorstehende Diffusionsstellen (5) sowie den Diffusionsstellen (5) gegenüberliegende Aussparungen (8) zur Aufnahme der punktförmigen Lichtelemente (9) hat, deren jeweilige Öffnung an einer von den Diffusionsstellen (5) abgewandten Oberfläche (7) liegt.

2. Lichtdiffusionselement nach Anspruch 1, dadurch **gekennzeichnet,** daß die Diffusionsstellen (5) eine asphärische Oberfläche haben.

3. Lichtdiffusionselement nach Anspruch 2, dadurch **gekennzeichnet,** daß die Diffusionsstellen (5) eine Oberfläche haben, die eine Rotationsfläche mit elliptischer Meridianlinie ist.

4. Lichtdiffusionselement nach Anspruch 3, dadurch **gekennzeichnet,** daß die Diffusionsstellen (5) dicht aneinander anschließen.

5. Lichtdiffusionselement nach einem der Ansprüche 1 bis 4, dadurch **gekennzeichnet,** daß die Aussparungen (8) eine Bodenfläche haben, die von der die Diffusionsstellen (5) tragenden Oberfläche (4) einen Abstand (D) hat, der so bemessen ist, daß ein aus einer Lichtleitfaser (9) austretendes Lichtbündel eine Umhüllende hat, die einen Umriß (6) der zugehörigen Diffusionsstelle (5) an der Plattenoberfläche, von der die Diffusionsstellen vorstehen, umschreibt.

## Claims

1. A light diffusion member associated with a light source comprising a series of punctiform light elements (9) characterised in that the light diffusion member comprises a plate (3) of material allowing light to pass and having diffusion studs (5) in projecting relationship on a face (4), and cavities (8) for receiving the punctiform light elements (9) which are disposed facing the diffusion studs (5) and open on to a face (7) opposite thereto.

2. A light diffusion member according to claim 1 characterised in that the diffusion studs (5) have an aspherical surface.

3. A light diffusion member according to claim 2 characterised in that the diffusion studs (5) have a rotationally symmetrical surface having an elliptical meridian.

4. A light diffusion member according to claim 3 characterised in that the diffusion studs (5) are joined in side-by-side relationship.

5. A light diffusion member according to one of claims 1 to 4 characterised in that the cavities (8) comprise a bottom spaced from the face (4) comprising the diffusion studs (5) by a distance (D) such that a beam issuing from an optical fibre (9) has an envelope circumscribed around a contour (6) of the diffusion stud (5) corresponding to the level of the face of the plate on which the diffusion studs are in projecting relationship.
